# EUROPÄISCHE PATENTSCHRIFT

(11) **EP 2 861 798 B1**
(45) Veröffentlichungstag und Bekanntmachung des Hinweises auf die Patenterteilung: **11.05.2016**
(21) Anmeldenummer: 13726563.3
(22) Anmeldetag: 05.06.2013
(51) Int. Cl.: D21B 1/32, D21G 9/00

(54) **FLOTATIONSREGELUNG**
FLOTATION CONTROL
RÉGULATION DE LA FLOTTATION

(30) Priorität: 19.06.2012 DE 102012210264
(43) Veröffentlichungstag der Anmeldung: 22.04.2015
(73) Patentinhaber: Voith Patent GmbH, 89522 Heidenheim (DE)
(72) Erfinder: BRITZ, Herbert, 88276 Berg (DE)
(86) Internationale Anmeldenummer: PCT/EP2013/061548
(87) Internationale Veröffentlichungsnummer: WO 2013/189736

(56) Entgegenhaltungen:
- WO-A1-2008/034953
- DE-A1-102008 031 411

## Beschreibung

Die Erfindung betrifft ein Verfahren zur Entfernung von Feststoffen mittels Gasblasen aus einer wässrigen Faserstoffsuspension in einer, eine oder mehrere Flotationszellen umfassenden Flotationsanlage, in denen durch Zuführung eines Faserstoffsuspension-Gas-Gemisches Flotationsschaum gebildet wird, welcher Feststoffe sammelt und aus den Flotationszellen über einen Überlauf in wenigstens eine Schaumsammelrinne geführt und dort aufgestaut wird, wobei die von den Feststoffen befreite Faserstoffsuspension als Gutstoff aus der jeweiligen Flotationszelle abgeleitet wird und die Höhe des Suspensionspegels in der jeweiligen Flotationszelle und/oder die Höhe des Schaumniveaus der jeweiligen Flotationszelle über eine Steuerung in Abhängigkeit von wenigstens einem Parameter des Gutstoffs veränderbar ist. Ein derartiges Verfahren ist aus der DE 102008031411 bekannt.

Durch Flotation wird ein die auszuscheidenden Stoffe enthaltender Schaum oder Schwimmschlamm gebildet. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so dass sie sich ausflotieren lassen.

Der hier beschriebene Flotationsvorgang nutzt die Unterschiede zwischen Papierfaserstoff und unerwünschten Störstoffteilchen in der Art, dass der Faserstoff auf Grund seines eher hydrophilen Charakters in der Fasersuspension verbleibt, während die angesprochenen Störstoffteilchen hydrophob sind und deshalb zusammen mit den Luftblasen in den Schaum gelangen. Es werden also nicht alle Feststoffe ausflotiert, sondern Fasern von Verunreinigungen getrennt.

Dabei geht es nicht nur um die Entfernung von Druckfarbenpartikeln, sondern auch von weiteren Stoffen, insbesondere Kleber, feinen Kunststoffpartikeln, einem Zuviel an Füllstoffen ("Asche") und eventuell auch Harzen.

Da der Flotationsschaum, der bei einer einzigen Flotationsstufe gebildet wird, in den meisten Fällen noch einen beträchtlichen Anteil von Papierfasern enthält, werden Verfahren dieser Art oft mit mehreren Flotationsstufen durchgeführt, wobei der Überlauf, also der Flotationsschaum, der stromaufwärtigen Stufe als Einlauf in die nächste Stufe geführt wird. Üblicherweise spricht man dann von einer ersten und zweiten Flotationsstufe oder auch von Primär- und Sekundärflotation. Der Durchlauf der zweiten Flotationsstufe kann dem Zulauf der ersten Flotationsstufe wieder zugegeben werden.
Anlagen, die nach einem solchen Verfahren arbeiten, haben sich an sich bewährt, da sie bei geringen Stoffverlusten zu einer guten Qualität des so gebildeten Gutstoffes führen. Es gibt auch Fälle, in denen der Durchlauf der zweiten Stufe dem Durchlauf der ersten Stufe zugemischt wird.

Da sich die Rohstoffe, insbesondere wenn sie aus Altpapier bestehen, in ihrer Zusammensetzung und Qualität ändern können, ist es meist notwendig, solche Flotationsanlagen zu regeln, um sie optimal fahren zu können. Eine solche Regelung kann bekannterweise so vorgenommen werden, dass die sich in den Flotationszellen befindende Papierfaserstoffsuspension auf einem geregelten Niveau gehalten wird. Dieses Flüssigkeitsniveau ist dann so einzustellen, dass bei der Trennung von Suspension und aufgeschwommenem Flotationsschaum die gewünschte Menge an Flotationsschaum abfließt.
Diese Trennung erfolgt zweckmäßigerweise mit Hilfe eines Überlaufwehres. Der abfließende Flotationsschaum gelangt in eine Schaumsammelrinne, in der er sich ansammelt und mit Hilfe einer Stauvorrichtung, z. B. einer Schlitzblende oder eines Schaumwehres angestaut und aus der Schaumsammelrinne abgeleitet wird. Aus der sich dabei einstellenden Stauhöhe des Flotationsschaumes in der Schaumsammelrinne lässt sich die Menge des abfließenden Schaumes bestimmen, was für die Regelung der Flotationsanlage genutzt werden kann.
Es versteht sich, dass bei steigendem Niveau des sich in der Schaumsammelrinne befindenden Flotationsschaumes ein größerer Schaumfluss vorliegt als bei niedrigerem Niveau. Die Menge des abgeführten Flotationsschaumes ist ein wichtiger Parameter bei der Regelung/Steuerung einer solchen Flotationsanlage, wie in der DE 10 2008 031 411 beschrieben.

Auch wenn diese Regelmöglichkeit in vielen Fällen zu ausreichenden Ergebnissen führt, lässt es sich nicht vermeiden, dass bei Änderung der Betriebsbedingungen, Rohstoffqualität und/oder Anforderungen an die Flotationsanlage (z. B. Sauberkeit, Weissgrad, Entaschungsgrad, Produktionsmenge der Anlage) in einer Betriebsweise gefahren wird, die weder wirtschaftlich noch technologisch im Optimum liegt.

Die Aufgabe der Erfindung ist es daher auch bei den genannten Schwankungen der Betriebsbedingungen oder Änderung der Anforderung eine effiziente Flotation bei möglichst hoher Qualität des Gutstoffs und hoher Ausbeute zu ermöglichen.

Erfindungsgemäß wurde die Aufgabe dadurch gelöst, dass der Parameter des Gutstoffs stromabwärts der Flotationszelle bei einer Stoffdichte von mehr als 3% gemessen wird.
Der Gutstoff hat am Auslauf der Flotationszelle eine Stoffdichte von weniger als 1,5% sowie einen relativ hohen Luftgehalt, was die Messung von Parametern des Gutstoffs erschwert oder gar unmöglich macht.
Die Messung stromabwärts bei wesentlich höherer Stoffdichte verbessert die Ergebnisqualität wesentlich, auch wenn dies die Totzeit der Regelstrecke verlängert. Da der Flotationsprozess ein langsamer Prozess ist, führt die Verlängerung der Totzeit zu keinem wesentlich Nachteil.
Auch die Qualität des Gutstoffs verändert sich stromabwärts der Flotation nur unwesentlich, was aber durch die höhere Messgenauigkeit mehr als ausgeglichen wird.

Die Höhe des Suspensionspegels kann über ein Ventil am Auslass der Flotationszelle beeinflusst werden.
Eine Steuerung der Höhe des Schaumniveaus ist über die mit dem Faserstoffsuspension-Gas-Gemisch zugeführte Luftmenge möglich. Wird die Luft direkt in die Faserstoffsuspension eingeblasen, so erlaubt dies eine direkte Beeinflussung der Luftmenge. Bei selbstansaugenden Düsen ist dies nur indirekt über eine Veränderung der Menge an Faserstoffsuspension möglich.
Die Luftmenge wirkt sich bei der Flotation auf den Faserverlust, die Reinheit des Gutstoffs sowie auf den Energieverbrauch aus. Auch die Blasengröße ist hierbei wichtig, da von dieser nicht nur die Steiggeschwindigkeit der Blasen sondern auch die Größe der ausflotierbaren Störstoffe abhängt.

Bei der Flotation bedeutet eine große Schaumhöhe über dem Suspensionspegel viel Energie zur Lufteinbringung, eine hohe Konsistenz des Schaums und letztlich wenig Faserverluste.
Durch eine Vergrößerung des Schaummengenflusses kann zumindest in bestimmten Grenzen die Qualität des flotierten Faserstoffes verbessert werden, insbesondere was Weißgrad und Schmutzpunkte anbetrifft. Gleichzeitig sinkt aber die Ausbeute der Rohstoffe und die Kosten für Chemikalien und Entsorgung steigen.
Im umgekehrten Fall, also bei Reduzierung der abgeführten Schaummenge kommt es zu einer Qualitätsverschlechterung bei höherer Ausbeute an Faserstoff.

Über die Höhe des Suspensionspegels in der Flotationszelle können die Schaumhöhe und der Schaummengenabfluss unabhängig voneinander gesteuert werden.
Mit Hilfe des erfindungsgemäßen Verfahrens ist es möglich, durch Regelungsvorgänge so in den Betrieb der Anlage einzugreifen, dass der wirtschaftlich und technologisch optimale Betriebszustand auch bei Änderungen insbesondere der Rohstoffe oder Anforderungen relativ schnell wieder erreicht werden kann.

Um die Qualität der Messung zu verbessern, sollte der Parameter des Gutstoffs bei einer Stoffdichte zwischen 3 und 15%, vorzugsweise zwischen 8 und 12% gemessen werden.
Dabei hat es sich als vorteilhaft erwiesen, wenn der Parameter des Gutstoffs nach einer Entwässerungsvorrichtung, vorzugsweise einem Scheibenfilter gemessen wird. Es kann aber auch von Vorteil sein, wenn der Parameter des Gutstoffs nach einer Pumpe gemessen wird. Das von der Pumpe erzeugte Turbulenzfeld führt nämlich zur Homogenisierung der Faserstoffsuspension vor der Messung.

Zur Beurteilung der Qualität des Gutstoffs sollte der Parameter des Gutstoffs die Helligkeit und/oder der Weißgrad und/oder der Aschegehalt und/oder die Anzahl der Schmutzpunkte und/oder die Anzahl der Stickies sein.

In den meisten Anwendungsfällen genügt es im Interesse eines geringen Aufwands, wenn die Steuerung der Höhe des Schaumniveaus und/oder des Suspensionspegels nur bei einer oder mehreren, aber nicht bei allen Flotationszellen erfolgt.

Allerdings wird die Schnelligkeit und Genauigkeit der Regelung verbessert, wenn die Steuerung der Höhe des Schaumniveaus und/oder des Suspensionspegels bei allen Flotationszellen erfolgt.

Nachfolgend soll die Erfindung an einem Ausführungsbeispiel näher erläutert werden. In der beigefügten Zeichnung zeigt:
Figur 1: einen Querschnitt durch eine Flotationszelle 2 und
Figur 2: ein Teil-Anlagenschema eine Stoffaufbereitungsanlage.

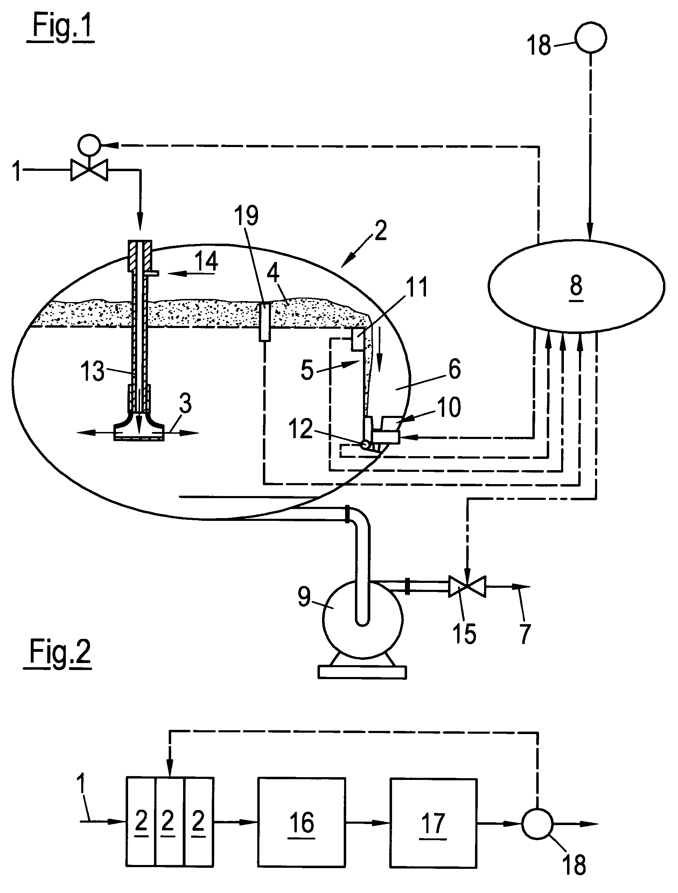

Gemäß Figur 2 wird die Papierfaserstoffsuspension 1 zur Reinigung einer Flotationsanlage zugeführt, welche mehrere Flotationszellen 2 bekannten Aufbaus umfasst, welche von der Suspension nacheinander oder parallel durchströmt werden.

Der in den Flotationszellen 2 gebildete störstoffhaltige Flotationsschaum 4 wird in einer Schaumsammelrinne 6 gesammelt, eventuell entlüftet und meist einer anderen Flotationszelle 3 (Sekundärflotation) zugeführt.

Nach der Flotation wird die Faserstoffsuspension 1 in Form des Gutstoffs 7 oft durch eine weitere Reinigungsvorrichtung 16, insbesondere einen Sortierer geleitet, bevor die Faserstoffsuspension 1 in einer Entwässerungsvorrichtung 17, wie einem Scheibenfilter, einer Schneckenpresse oder einem Wäscher auf eine Stoffdichte von 8 bis 12% eingedickt wird.
Diese wesentlich über der Stoffdichte von weniger als 1,5% am Auslauf der Flotation liegende Stoffdichte erlaubt eine genaue Messung von Qualitätsparametern der Faserstoffsuspension 1 mittels einer Messvorrichtung 18. Bei dem gemessenen Parameter des Gutstoffs 7 kann es sich um die Helligkeit und/oder den Weißgrad und/oder den Aschegehalt und/oder die Anzahl der Schmutzpunkte und/oder die Anzahl der Stickies handeln.
Sollen diese Parameter der Faserstoffsuspension 1 verändert werden, so kann dies sehr effizient durch eine Steuerung/Regelung der Flotationsanlage erfolgen.

Hierzu wird die Höhe des Suspensionspegels in den Flotationszellen 2 gemäß Figur 1 jeweils mit Hilfe eines Niveausensors 11 gemessen und an eine Steuerung/Regelung 8 übermittelt.
Des Weiteren erfasst ein Sensor 12 das Schaumniveau in der Schaumsammelrinne 6 und ein Sensor 19 die Höhe des Schaums 4 über dem Suspensionspegel. Auch diese Werte werden an die Steuerung 8 übertragen.
Ein höheres Niveau in der Schaumsammelrinne 6 bedeutet im Normalfall einen größeren Schaummengenabfluss an der Stauvorrichtung 10. Soll dieser Abfluss geändert werden, kann z.B. der durchströmte offene Querschnitt der Stauvorrichtung 10 anders eingestellt werden, wodurch sich das Niveau des Schaumes in der Schaumsammelrinne 6 ändert.

Der über die Stauvorrichtung 10 austretende Flotationsschaum 4 fließt in ein Schaumfallrohr ab. Dabei kann die Stauvorrichtung 10 von einer Blende mit einem beispielhaft etwa in der Mitte liegenden offenen Spaltquerschnitt gebildet werden, der sich bis zum Boden der Schaumsammelrinne 6 erstreckt und dessen offener Teil dadurch verändert wird, dass mit Hilfe einer vertikal verfahrbaren Abdeckplatte größere oder kleinere Bereiche abgedeckt werden.

Die in Figur 1 dargestellte Flotationszelle 2 zeigt das Abfließen des Flotationsschaumes 4 über einen Überlauf 5 in die Schaumsammelrinne 6 dieser Flotationszelle 2. Oft sind mehrere solcher Flotationszellen 2 zu einer Flotationsstufe zusammengestellt und so miteinander hydraulisch verbunden, dass sich in ihnen ein gleiches Flüssigkeitsniveau einstellt.
Zufuhr und Belüftung des in die Flotationszelle 2 zugeführten Stoffstromes erfolgt durch eine Mischvorrichtung 13. Diese saugt die Luft 14 aus dem Inneren der Flotationszelle 2 ab.
Der Gutstoff 7 dieser Flotationszelle 2 wird über eine Pumpe 9 abgepumpt. Wenn es sich bei der Flotationszelle 2 nicht um die erste oder letzte Zelle einer Flotationsstufe handelt, werden meist Pumpen 9 verwendet, die den Gutstoff 7 einer stromaufwärtigen Flotationszelle 2 zur Mischvorrichtung 13 der stromabwärtigen Flotationszelle 2 führen.
Über die Steuerung der Menge an Flotationsschaum 4, welche aus der Schaumsammelrinne 6 abgeführt wird, können die Parameter des Gutstoffs 7 beeinflusst werden. Sollen die Qualitätsparameter wie Weißgrad oder Sauberkeit erhöht werden, so muss mehr Flotationsschaum 4 aus der Schaumsammelrinne 6 abgeleitet werden.
Falls jedoch der Aschegehalt im Gutstoff 7 erhöht und/oder die Faserverluste vermindert werden sollen, so wird weniger Flotationsschaum 4 abgeführt.
Dabei führt eine verstärkte Abfuhr von Flotationsschaum 4 zu einem Absenken des Suspensionsniveaus in der Flotationszelle 2 und eine verminderte Abfuhr zum Ansteigen des Suspensionsniveaus.

Diese Schwankungen des Suspensionsniveaus führen wegen des Überlaufs 5 zu unterschiedlich hohen Schaumschichthöhen und unterschiedlichen Schaumzusammensetzungen.
Um den Suspensionspegel zu verändern, wird entsprechend mehr oder weniger an Faserstoffsuspensions-Gas-Gemisch 3 in die entsprechenden Flotationszellen 2 geleitet. Veränderbar ist diese Menge über steuerbare Pumpen 9 oder über Ventile 15 in der Zufuhr.
Im Sinne einer vorauseilenden und damit sehr schnellen Regelung ist es jedoch auch möglich, dass bei wenigstens einer Flotationszelle 2 unmittelbar nach einer Veränderung der Menge des aus der Schaumsammelrinne 6 abgeführten Flotationsschaumes 4 die Menge des zugeführten Faserstoffsuspensions-Gas-Gemisches 3 von der Steuerung 8 verändert wird. Dabei kann auf Erfahrungswerte zurückgegriffen werden in welchem Umfang eine Änderung sich auswirkt.

## Patentansprüche

1. Verfahren zur Entfernung von Feststoffen mittels Gasblasen aus einer wässrigen Faserstoffsuspension (1) in einer, eine oder mehrere Flotationszellen (2) umfassenden Flotationsanlage, in denen durch Zuführung eines Faserstoffsuspension-Gas-Gemisches (3) Flotationsschaum (4) gebildet wird, welcher Feststoffe sammelt und aus den Flotationszellen (2) über einen Überlauf (5) in wenigstens eine Schaumsammelrinne (6) geführt und dort aufgestaut wird, wobei die von den Feststoffen befreite Faserstoffsuspension als Gutstoff (7) aus der jeweiligen Flotationszelle (2) abgeleitet wird und die Höhe des Suspensionspegels in der jeweiligen Flotationszelle (2) und/oder die Höhe des Schaumniveaus der jeweiligen Flotationszelle (2) über eine Steuerung (8) in Abhängigkeit von wenigstens einem Parameter des Gutstoffs (7) veränderbar ist, **dadurch gekennzeichnet, dass** der Parameter des Gutstoffs (7) stromabwärts der Flotationszelle (2) bei einer Stoffdichte von mehr als 3% gemessen wird.

2. Verfahren nach Anspruch 1, **dadurch gekennzeichnet, dass** der Parameter des Gutstoffs (7) bei einer Stoffdichte zwischen 3 und 15%, vorzugsweise zwischen 8 und 12% gemessen wird.

3. Verfahren nach Anspruch 1 oder 2, **dadurch gekennzeichnet, dass** der Parameter des Gutstoffs (7) nach einer Entwässerungsvorrichtung (17), vorzugsweise einem Scheibenfilter gemessen wird.

4. Verfahren nach Anspruch 1 oder 2, **dadurch gekennzeichnet, dass** der Parameter des Gutstoffs (7) nach einer Pumpe gemessen wird.

5. Verfahren nach einem der vorhergehenden Ansprüche, **dadurch gekennzeichnet, dass** der Parameter des Gutstoffs (7) die Helligkeit und/oder der Weißgrad und/oder der Aschegehalt und/oder die Anzahl der Schmutzpunkte und/oder die Anzahl der Stickies ist.

6. Verfahren nach einem der vorhergehenden Ansprüche, **dadurch gekennzeichnet, dass** die Steuerung der Höhe des Schaumniveaus und/oder des Suspensionspegels nur bei einer oder mehreren, aber nicht bei allen Flotationszellen (2) erfolgt.

7. Verfahren nach einem der Ansprüche 1 bis 5, **dadurch gekennzeichnet, dass** die Steuerung der Höhe des Schaumniveaus und/oder des Suspensionspegels bei allen Flotationszellen (2) erfolgt.

## Claims

1. Method for removing solids from an aqueous fibrous suspension (1) by means of gas bubbles in a flotation system comprising one or more flotation cells (2), in which, by feeding in a fibrous suspension-gas mixture (3), flotation foam (4) is formed, which collects solids and is led out of the flotation cells (2) via an overflow (5) into at least one foam collecting channel (6) and is accumulated there, the fibrous suspension freed of the solids being led out of the respective flotation cell (2) as accepted material (7), and the height of the suspension level in the respective flotation cell (2) and/or the height of the foam level of the respective flotation cell (2) being variable via a control system (8) on the basis of at least one parameter of the accepted material (7),
**characterized in that**
the parameter of the accepted material (7) is measured downstream of the flotation cell (2) at a consistency of more than 3%.

2. Method according to Claim 1, **characterized in that** the parameter of the accepted material (7) is measured at a consistency between 3 and 15%, preferably between 8 and 12%.

3. Method according to Claim 1 or 2, **characterized in that** the parameter of the accepted material (7) is measured after a dewatering device (17), preferably a disc filter.

4. Method according to Claim 1 or 2, **characterized in that** the parameter of the accepted material (7) is measured after a pump.

5. Method according to one of the preceding claims, **characterized in that** the parameter of the accepted material (7) is the brightness and/or the whiteness and/or the ash content and/or the number of dirt specks and/or the number of stickies.

6. Method according to one of the preceding claims, **characterized in that** the height of the foam level and/or of the suspension level is controlled in only one or more but not in all the flotation cells (2).

7. Method according to one of Claims 1 to 5, **characterized in that** the height of the foam level and/or of the suspension level is controlled in all the flotation cells (2).

## Revendications

1. Procédé d'enlèvement de matière solide hors d'une suspension aqueuse (1) de matière fibreuse au moyen de bulles de gaz dans une installation de flottation comprenant une ou plusieurs cellules de flottation (2) dans lesquelles, par amenée d'un mélange (3) formé d'une suspension de matière fibreuse et de gaz, une mousse de flottation (4) est formée, recueille les matières solides et est amenée hors des cellules de flottation (2) par une surverse (5) dans au moins une rigole (6) de collecte de mousse pour y être accumulée, la suspension de matière fibreuse débarrassée des solides étant évacuée comme matière valorisée (7) hors de chaque cellule de flottation (2) et le niveau de suspension dans chaque cellule de flottation (2) et/ou le niveau de mousse dans chaque cellule de flottation (2) pouvant être modifiés par l'intermédiaire d'une commande (8) en fonction d'au moins un paramètre de la matière valorisée (7),
**caractérisé en ce que**
le paramètre de la matière valorisée (7) est mesuré en aval de la cellule de flottation (2) à une densité de matière supérieure à 3 %.

2. Procédé selon la revendication 1, **caractérisé en ce que** le paramètre de la matière valorisée (7) est mesuré à une densité de matière comprise entre 3 et 15 % et de préférence entre 8 et 12 %.

3. Procédé selon les revendications 1 ou 2, **caractérisé en ce que** le paramètre de la matière valorisée (7) est mesuré après un ensemble (17) d'essorage, de préférence un filtre à plaque.

4. Procédé selon les revendications 1 ou 2, **caractérisé en ce que** le paramètre de la matière valorisée (7) est mesuré après une pompe.

5. Procédé selon l'une des revendications précédentes, **caractérisé en ce que** le paramètre de la matière valorisée (7) est la clarté, le degré de blancheur, la teneur en cendres, le nombre de points d'encrassement et/ou le nombre d'éléments adhérents.

6. Procédé selon l'une des revendications précédentes, **caractérisé en ce que** la commande du niveau de mousse et/ou de suspension ne s'effectue que sur une ou plusieurs cellules de flottation (2) et non sur toutes ces cellules.

7. Procédé selon l'une des revendications 1 à 5, **caractérisé en ce que** la commande du niveau de mousse et/ou du niveau de suspension s'effectue sur toutes les cellules de flottation (2).
